# EUROPÄISCHE PATENTSCHRIFT

(11) **EP 2 335 525 B1**
(45) Veröffentlichungstag und Bekanntmachung des Hinweises auf die Patenterteilung: **05.06.2013**
(21) Anmeldenummer: 10175813.4
(22) Anmeldetag: 08.09.2010
(51) Int. Cl.: A47B 96/20, F16B 5/01, F16B 12/46, F16B 12/48

(54) **Tisch mit Verbindungsanordnung**
Table with connection device
Table avec moyen de liaison

(30) Priorität: 21.12.2009 DE 202009017363 U
(43) Veröffentlichungstag der Anmeldung: 22.06.2011
(73) Patentinhaber: Fritz Egger GmbH & Co. OG, 3105 Unterradlberg (AT)
(72) Erfinder: Reiter, Bruno, 6380 St. Johann in Tirol (AT)
(74) Vertreter: Cohausz & Florack

(56) Entgegenhaltungen:
- DE-A1-102007 007 663
- DE-U1- 20 219 588
- DE-U1-202005 005 579
- DE-U1-202007 013 800
- FR-A- 1 334 491

## Beschreibung

Die Erfindung betrifft einen Tisch mit einer sich in einer Längsrichtung erstreckenden Platte, mit mindestens einem sich senkrecht zur Längsrichtung erstreckenden Möbelfuß und mit einer Verbindungsanordnung, die die Platte mit dem mindestens einen Möbelfuß verbindet.

Aus dem Stand der Technik ist eine Vielzahl von Tischen bekannt, die eine horizontale Platte und in der Regel vier vertikale Möbelfüße aufweisen. Herkömmliche Möbelplatten, beispielsweise Tischplatten, bestehen in der Regel aus einem Holzwerkstoff, beispielsweise einer Span-, Faser- oder OSB-Platte (OSB: Oriented-Strand-Board). Die mit Bindemittel versehenen und verpressten Holzpartikel, die den Holzwerkstoff bilden, sind über die gesamte Dicke der Platte verteilt, so dass eine stabile Befestigung der Möbelfüße an der Unterseite der Platte ohne weiteres möglich ist. So ist es bekannt, die Möbelfüße, beispielsweise Tischbeine, unmittelbar oder unter Verwendung von Winkeleisen, mit der Platte, beispielsweise Tischplatte, zu verschrauben, wobei die Schrauben unmittelbar in den Holzwerkstoff oder in darin vorgesehene Dübel eingeschraubt werden. Ein derartiger Tisch ist beispielsweise aus der DE 20219588U bekannt.

Aus dem Stand der Technik sind auch sogenannte Leichtbauplatten bekannt. Diese weisen eine obere Deckplatte und eine untere Deckplatte aus einem Lignozellulose enthaltenden Material, insbesondere einem Holzwerkstoff, sowie eine dazwischen angeordnete leichte Mittellage auf. Leichte Mittellage bedeutet, dass das Gewicht bzw. die Dichte der Mittellage geringer als bei der oberen Deckplatte und der unteren Deckplatte ist. Eine leichte Mittellage kann aus einem Wabenmaterial, insbesondere einem Kartonwabenmaterial, oder aus einer Schaumlage bestehen. Auch Leichtbauplatten können zur Herstellung eines Möbels dienen. Da aber die Deckplatten häufig sehr dünn sind und beispielsweise eine Dicke von nur wenigen Millimetern oder sogar Bruchteilen von Millimetern aufweisen, würde eine herkömmliche Verschraubung zur Anbringung eines Möbelfußes an einer Leichtbauplatte nicht genug Halt finden, um eine ausreichende Stabilität zu gewährleisten.

Um Leichtbauplatten mit anderen Bauteilen zu Verbinden werden üblicherweise Verbindungsanordnungen wie aus DE 10 2007 007 663, DE 202007013800U oder DE 2005 005 579 U bekannt verwendet.

Es ist daher die Aufgabe der vorliegenden Erfindung, einen Tisch zu schaffen, welcher auch bei Verwendung einer Leichtbauplatte eine stabile Verbindung zwischen Leichtbauplatte und Möbelfuß gewährleistet.

Die zuvor hergeleitete und aufgezeigte Aufgabe wird erfindungsgemäß gelöst durch einen Tisch, mit einer sich in einer Längsrichtung erstreckenden Leichtbauplatte, die eine obere Deckplatte und eine untere Deckplatte aus einem Lignozellulose enthaltenden Material sowie eine dazwischen angeordnete leichte Mittellage aufweist wobei die Mittellage aus einem Wabemmaterial besteht, mit mindestens einem, insbesondere mehreren, vorzugsweise vier, sich senkrecht zur Längsrichtung erstreckenden Möbelfuß/Möbelfüßen - hierbei kann es sich um ein Tischbein bzw. Tischbeine handeln -, der/die vorzugsweise zumindest in einem Abschnitt aus Vollmaterial besteht/bestehen, wobei der mindestens eine Möbelfuß mit einer seiner Stirnseiten der Außenseite der unteren Deckplatte zugewandt ist, mit einer Verbindungsanordnung, die die Leichtbauplatte mit dem mindestens einen Möbelfuß verbindet, wobei die Verbindungsanordnung je Möbelfuß mindestens eine erste Ausnehmung, die in der der Außenseite der unteren Deckplatte zugewandten Stirnseite des mindestens einen Möbelfußes vorgesehen ist und insbesondere bis in den Abschnitt aus Vollmaterial reicht, mindestens eine zu der ersten Ausnehmung koaxiale zweite Ausnehmung, die in der Leichtbauplatte vorgesehen ist und durch die untere Deckplatte und die Mittellage hindurch bis mindestens in die obere Deckplatte, aber nicht durch diese hindurch reicht, und mindestens einen als Holzdübel ausgebildeten Verbindungsstift aufweist, der mit einem Presssitz in der mindestens einen ersten Ausnehmung und in der mindestens einen zweiten Ausnehmung angeordnet ist.

Indem eine Ausnehmung im Möbelfuß und eine dazu koaxiale Ausnehmung in der Leichtbauplatte sowie ein in den Ausnehmungen angeordneter Verbindungsstift vorgesehen ist, wobei die Ausnehmungen erlauben, dass der Verbindungsstift durch die untere Deckplatte und die Mittellage bis zumindest an die obere Deckplatte, vorzugsweise sogar in die obere Deckplatte hinein, reicht, wird erstmalig eine Verbindungsanordnung geschaffen, die eine stabile Verbindung zwischen Möbelfuß und Leichtbauplatte gewährleistet. So hat diese spezielle Verbindungsanordnung den Vorteil, dass die einzelnen Verbindungselemente, hier der Verbindungsstift, nicht allein in einer einzigen Deckplatte, nämlich der unteren Deckplatte, verankert ist, sondern, da er durch die Leichtbauplatte hindurch bis an die obere Deckplatte reicht, auch an der gegenüberliegenden oberen Deckplatte verankert werden kann. Ein weiterer Vorteil ist, dass der Verbindungsstift eine senkrecht auf die obere Deckplatte wirkende Kraft im Eckbereich der Leichtbauplatte auffangen und unmittelbar in den zugehörigen Möbelfuß übertragen kann, wodurch im Eckbereich der Leichtbauplatte sehr viel größere Lasten eingeleitet werden können als im Vergleich zu dem Fall, dass keine Verbindungsstifte vorgesehen sind und die Last von der oberen Deckplatte unmittelbar auf die leichte und im Eckbereich vergleichsweise instabile Mittellage einwirkt.

Um die Stabilität weiter zu erhöhen, ist gemäß einer Ausgestaltung vorgesehen, dass die Verbindungsanordnung je Möbelfuß mindestens zwei erste Ausnehmungen, die in der der Außenseite der unteren Deckplatte zugewandten Stirnseite des mindestens einen Möbelfußes vorgesehen sind und insbesondere in den Abschnitt aus Vollmaterial reichen, mindestens zwei zu den ersten Ausnehmungen jeweils koaxiale zweite Ausnehmungen, die in der Leichtbauplatte vorgesehen sind und durch die untere Deckplatte und die Mittellage hindurch bis mindestens an die obere Deckplatte reichen, und mindestens zwei Verbindungsstifte aufweist, die jeweils in einer der mindestens zwei ersten Ausnehmungen und einer der mindestens zwei zweiten Ausnehmungen angeordnet sind. Sind zwei Verbindungsstifte vorgesehen, so können diese auch diagonal angeordnet sein, das heißt die Verbindungsstifte sind in Ausnehmungen angeordnet, die auf einer Geraden liegen, die eine Diagonale zwischen den beiden gegenüberliegenden Ecken der Leichtbauplatte bildet.

Alternativ ist es auch denkbar, auf die erste(n) Ausnehmung(en) und den jeweils darin abschnittsweise angeordneten Verbindungsstift zu verzichten und stattdessen an der zur unteren Deckplatte gewandten Stirnseite des Möbelfußes ein Profil oder ein Insert vorzusehen bzw. mit dem Möbelfuß zu verbinden, welches Profil oder Insert einen oder mehrere stiftartige Vorsprünge als Verbindungsstifte aufweist, die in Richtung der Leichtbauplatte weisen und die Funktion der zuvor beschriebenen Verbindungsstifte übernehmen. In diesem Fall könnten also der bzw. die stiftartigen Vorsprünge als Verbindungsstifte Bestandteil des Möbelfußes sein und insbesondere einstückig mit diesem ausgeführt sein.

Erfindungsgemäß ist vorgesehen, dass die mindestens eine zweite Ausnehmung bis in die obere Deckplatte, aber nicht vollständig durch diese hindurch reicht. Indem die Ausnehmung noch bis ins Innere der oberen Deckplatte reicht, wird eine verbesserte Verankerung des jeweiligen Verbindungsstifts in der oberen Deckplatte erreicht. Insbesondere kann der jeweilige Verbindungsstift auf diese Weise auch relativ große Momente von der Leichtbauplatte auf den jeweiligen Möbelfuß übertragen. Auch ist, wenn je Möbelfuß zwei Verbindungsstifte vorgesehen sind, eine Verdrehsicherung gegeben, was gegenüber herkömmlichen Systemen, die mit einer am Möbelfuß vorgesehenen stirnseitigen Schraubverbindung ausgestattet sind, einen entscheidenden Vorteil bedeutet, vor allem wenn der Möbelfuß nicht kreisrund im Querschnitt ist und/oder ein Auflagestift, wie er noch beschrieben wird, vorgesehen ist.

Gemäß noch einer weiteren Ausgestaltung ist die mindestens eine erste Ausnehmung und/oder die mindestens eine zweite Ausnehmung eine Bohrung. Insbesondere handelt es sich bei der jeweiligen Bohrung um eine Sacklochbohrung, also eine nicht durchgängige Bohrung. Bohrungen können auf einfache Weise, insbesondere auch automatisiert, eingebracht werden. Sacklochbohrungen haben den Vorteil, dass der Verbindungsstift am Grund der jeweiligen Bohrung eine Anlage findet und auf diese Weise optimal Kräfte von der oberen Deckplatte auf den jeweiligen Möbelfuß übertragen kann.

Insbesondere zu diesem Zweck entspricht gemäß noch einer weiteren Ausgestaltung die Länge des mindestens einen Verbindungsstifts der Summe aus der Tiefe der mindestens einen ersten Ausnehmung und der mindestens einen zweiten Ausnehmung. Auf diese Weise ist eine Anlage des Verbindungsstifts am Grund der jeweiligen Ausnehmung, insbesondere Sacklochbohrung, und damit optimale Kraftübertragung garantiert.

Erfindungsgemäß ist der mindestens eine Verbindungsstift mit einem Presssitz in der mindestens einen ersten Ausnehmung und der mindestens einen zweiten Ausnehmung angeordnet. Dadurch wird die Stabilität der Verbindungsanordnung weiter erhöht.

Gemäß noch einer weiteren Ausgestaltung liegt die der Außenseite der unteren Deckplatte zugewandte Stirnseite des mindestens einen Möbelfußes an der Außenseite der unteren Deckplatte an. Auch auf diese Weise kann die Stabilität weiter erhöht werden.

Um die Verbindung zwischen Leichtbauplatte und Möbelfuß weiter zu verbessern, ist gemäß noch einer weiteren Ausgestaltung vorgesehen, dass die Verbindungsanordnung ferner ein Klebemittel umfasst, das in der mindestens einen ersten Ausnehmung und/oder in der mindestens einen zweiten Ausnehmung und/oder zwischen der der unteren Deckplatte zugewandten Stirnseite und der Außenseite der unteren Deckplatte vorgesehen ist.

Ferner kann gemäß einer weiteren Ausgestaltung vorgesehen sein, dass je Möbelfuß mindestens eine dritte Ausnehmung in einer der zur Längsrichtung senkrechten Seiten oder Kanten des mindestens einen Möbelfußes vorgesehen ist, wobei insbesondere ein Auflagestift in der mindestens einen dritten Ausnehmung angeordnet ist, der teilweise aus der dritten Ausnehmung herausragt. Mit Hilfe solcher Auflagestifte, auch Aufleger genannt, können Zwischenböden zwischen mehreren Möbelfüßen eingesetzt werden. Diese Zwischenböden können auch die Stabilität des Möbels insgesamt noch weiter erhöhen.

Die einzelnen Materialien der Bauteile, die der erfindungsgemäße Tisch bildet, werden im Folgenden beschrieben.

Gemäß einer Ausgestaltung besteht die obere Deckplatte und/oder die untere Deckplatte aus einem Holzwerkstoff. Bei dem Holzwerkstoff handelt es sich insbesondere um eine Span-, Faser- oder OSB-Platte. Die obere Deckplatte und/oder die untere Deckplatte kann aber auch aus einem Schichtstoff bestehen, das heißt einem plattenförmigen Schichtaufbau aus mehreren harzgetränkten und verpressten Papieren. Die obere Deckplatte und/oder die untere Deckplatte kann eine Dicke aufweisen, die in einem Bereich von 0,5 bis 10 mm, bevorzugt von 0,5 bis 5 mm, besonders bevorzugt von 0,5 bis 2 mm, liegt. Durch die erfindungsgemäß vorgesehene Verbindungsanordnung sind auch Möbel mit solchen Deckplatten sehr stabil.

Die Mittellage besteht erfindungsgemäß aus einem Wabenmaterial, insbesondere Kartonwabenmaterial. Der Tisch wird dadurch erheblich leichter, ohne dadurch aber an Stabilität zu verlieren.

Der mindestens eine Möbelfuß besteht gemäß einer weiteren Ausgestaltung zumindest abschnittsweise, vorzugsweise vollständig, aus Vollmaterial. Hier kann auf einfache Seite eine Ausnehmung, insbesondere Bohrung, eingebracht werden, die mit dem jeweiligen Verbindungsstift zusammenwirkt. Insbesondere besteht der Möbelfuß zumindest abschnittsweise, vorzugsweise vollständig, aus Vollholz oder einem Holzwerkstoff. Bei dem Holzwerkstoff handelt es sich vorzugsweise um ein Span-, Faser- oder OSB-Pressteil. Der Möbelfuß muss aber nicht zwingend ein Vollmaterial aufweisen, sondern es könnte auch ein entsprechend ausgeformtes Profil oder ein Insert vorgesehen sein, um den mindestens einen Verbindungsstift aufzunehmen bzw. mit dem Möbelfuß zu verbinden.

Auch der mindestens eine Verbindungsstift kann aus Holzmaterial bestehen. So ist gemäß einer weiteren Ausgestaltung vorgesehen, dass der jeweilige Auflagestift ein Holzdübel ist. Solche Stifte, insbesondere Holzdübel, sind besonders stabil, einfach einzusetzen, insbesondere auch automatisiert einzusetzen, und kostengünstig.

Die Leichtbauplatte ist gemäß noch einer weiteren Ausgestaltung zumindest in dem Bereich der mindestens zweiten Ausnehmung, also bevorzugt im Rand- oder Eckbereich, frei von Riegeln. Riegel werden als Einzelriegel oder in Form eines aus mehreren Riegeln zusammengesetzten Rahmens häufig aus Stabilitätsgründen in Leichtbauplatten eingesetzt, um insbesondere den Randbereich zu unterstützen. Durch die erfindungsgemäße Verbindungsanordnung ist dies aber nicht mehr zwingend erforderlich, da die Stützfunktion von den Verbindungsstiften übernommen werden kann. Es ist also möglich, auf eine stabile Ausgestaltung der Kante zu verzichten. Erfindungsgemäß reicht sogar insbesondere eine Kante aus, die beispielsweise aus einem Schichtstoff mit einer Dicke im Bereich von 0,2 bis 1,5 mm, bevorzugt von 0,3 bis 1 mm, besteht. Ein solchermaßen aufgebautes Möbel ist besonders einfach und kostengünstig herzustellen und hat ein besonders geringes Gewicht.

Besondere Vorteile des erfindungsgemäßen Tischs und der erfindungsgemäß vorgesehenen Verbindungsanordnung sind insbesondere ein abgesichertes Verdrehungsmoment, eine sehr stabile Befestigung, eine leichte Montage durch Verwendung eines Stecksystems, die Möglichkeit des Bohrens und des Einsetzens der Stifte im Durchlauf, die Möglichkeit einer Verwendung von allgemein erhältlichem Standard-Leim, der auch in Tubenform erhältlich ist, und die geringen Kosten. Auch bleibt durch die die Last übertragenden Verbindungsstifte die Auflagefläche auch im Eckbereich immer in Position. Schließlich ist der erfindungsgemäße Tisch durch die Möglichkeit des Verzichts auf Metalbolzen auch unter ökologischen Gesichtspunkten vorteilhaft, da es auch auf einfache Weise recycelt werden kann.

Es gibt nun eine Vielzahl von Möglichkeiten, der erfindungsgemäße Tisch auszugestalten und weiterzubilden. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: eine vertikale Schnittansicht eines Eckbereichs eines erfindungsgemäßen Tischs und
- Fig. 2: eine Draufsicht auf den Eckbereich des Tischs aus Fig. 1.

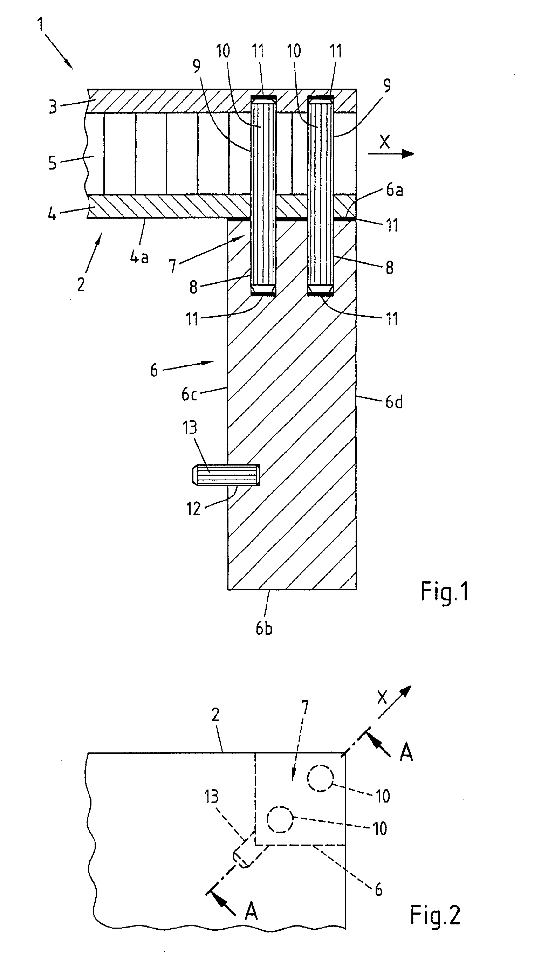

Aus den Figuren 1 und 2 ist ein Möbel 1 in Form eines Tisches dargestellt. Dabei zeigt Fig. 1 einen Schnitt durch einen Eckbereich entlang der Schnittlinie AA, die in Fig. 2 dargestellt ist.

Bei dem Möbel 1 handelt es sich um einen Tisch mit einer sich in einer Längsrichtung X erstreckenden Leichtbauplatte 2, die eine obere Deckplatte 3 und eine untere Deckplatte 4 aus einem Lignozellulose enthaltenden Material sowie eine dazwischen angeordnete leichte Mittellage 5 aufweist, mit mindestens einem sich senkrecht zur Längsrichtung X erstreckenden Möbelfuß 6, der zumindest in einem Abschnitt aus Vollmaterial besteht, wobei der mindestens eine Möbelfuß (6) mit einer seiner Stirnseiten 6a, 6b der Außenseite 4a der unteren Deckplatte 4 zugewandt ist, mit einer Verbindungsanordnung 7, die die Leichtbauplatte 2 mit dem mindestens einen Möbelfuß 6 verbindet, wobei die Verbindungsanordnung 7 je Möbelfuß 6 mindestens eine erste Ausnehmung 8, die in der der Außenseite 4a der unteren Deckplatte 4 zugewandten Stirnseite 6a des mindestens einen Möbelfußes 6 vorgesehen ist und bis in den Abschnitt aus Vollmaterial reicht, mindestens eine zu der ersten Ausnehmung 8 koaxiale zweite Ausnehmung 9, die in der Leichtbauplatte 2 vorgesehen ist und durch die untere Deckplatte 4 und die Mittellage 5 hindurch bis mindestens an die obere Deckplatte 3 reicht, und mindestens einen Verbindungsstift 10 aufweist, der in der mindestens einen ersten Ausnehmung 8 und in der mindestens einen zweiten Ausnehmung 9 angeordnet ist.

Wie den Figuren 1 und 2 zu entnehmen ist, sind zur Erhöhung der Stabilität je Verbindungsanordnung 7 zwei erste Ausnehmungen 8, zwei dazu koaxiale zweite Ausnehmungen 9 und zwei entsprechende in den Ausnehmungen angeordnete Verbindungsstifte 10 vorgesehen.

Die zweiten Ausnehmungen 9 reichen dabei bis in die obere Deckplatte 3, gehen aber nicht über diese hinaus. Bei allen Ausnehmungen handelt es sich um Sacklochbohrungen.

Dabei entspricht die Länge der Verbindungsstifte 10 der Summe aus der Tiefe der jeweils ersten Ausnehmung 8 und der jeweils zweiten Ausnehmung 9. Die Verbindungsstifte 10 sind hier jeweils mit einem Presssitz in den Ausnehmungen verankert.

Die Leichtbauplatte 2 liegt mit ihrer Unterseite 4a auf der oberen Stirnseite 6a des Möbelfußes 6 auf. Zwischen Leichtbauplatte 2 und Möbelfuß 6 ist ein Klebemittel 11 vorgesehen. Dasselbe Klebemittel 11 ist auch am Grund der Ausnehmungen 8 und 9 vorgesehen.

Der Möbelfuß 6 weist ferner eine dritte Ausnehmung 12 in einer der zur Längsrichtung X senkrechten Kanten 6c und 6d auf, wobei ein Auflagestift 13 in dieser dritten Ausnehmung 12 angeordnet ist, der teilweise aus der dritten Ausnehmung 12 herausragt. Der Auflagestift bildet einen Aufleger für eine Zwischenplatte (nicht dargestellt).

Bei dem Material der oberen Deckplatte 3 und der unteren Deckplatte 4 handelt es sich im vorliegenden Ausführungsbeispiel um einen nur wenige Millimeter dicken Schichtstoff. Bei der Mittellage 5 handelt es sich um ein Kartonwabenmaterial. Der Möbelfuß besteht vollständig aus Vollmaterial, hier MDF (Mitteldichte Faserplatte).

Wie schließlich anhand von Fig. 2 erkennbar ist, sind die beiden Verbindungsstifte 10 auf einer gedachten Diagonale angeordnet, die hier der Längsrichtung X und gleichzeitig der Schnittlinie AA entspricht.

## Patentansprüche

1. Tisch
- mit einer sich in einer Längsrichtung (X) erstreckenden Leichtbauplatte (2), die eine obere Deckplatte (3) und eine untere Deckplatte (4) aus einem Lignozellulose enthaltenden Material sowie eine dazwischen angeordnete leichte Mittellage (5) aufweist, wobei die Mittellage (5) aus einem Wabenmaterial besteht,
- mit mindestens einem sich senkrecht zur Längsrichtung (X) erstreckenden Möbelfuß (6), wobei der mindestens eine Möbelfuß (6) mit einer seiner Stirnseiten (6a,6b) der Außenseite (4a) der unteren Deckplatte (4) zugewandt ist,
- mit einer Verbindungsanordnung (7), die die Leichtbauplatte (2) mit dem mindestens einen Möbelfuß (6) verbindet,
wobei die Verbindungsanordnung (7) je Möbelfuß (6) mindestens eine erste Ausnehmung (8), die in der der Außenseite (4a) der unteren Deckplatte (4) zugewandten Stirnseite (6a) des mindestens einen Möbelfußes (6) vorgesehen ist, mindestens eine zu der ersten Ausnehmung (8) koaxiale zweite Ausnehmung (9), die in der Leichtbauplatte (2) vorgesehen ist und durch die untere Deckplatte (4) und die Mittellage (5) hindurch bis mindestens an die obere Deckplatte (3) reicht, und mindestens einen Verbindungsstift (10) aufweist, der in der mindestens einen ersten Ausnehmung (8) und in der mindestens einen zweiten Ausnehmung (9) angeordnet ist,
**dadurch gekennzeichnet,**
**dass** die mindestens eine zweite Ausnehmung (9) bis in die obere Deckplatte (3), aber nicht vollständig durch diese hindurch reicht, wobei der mindestens eine als ein Holzdübel ausgebildete Verbindungsstift (10) mit einem Presssitz in der mindestens einen ersten Ausnehmung (8) und in der mindestens einen zweiten Ausnehmung (9) angeordnet ist.

2. Tisch (1) nach Anspruch 1, **dadurch gekennzeichnet, dass** die Verbindungsanordnung (7) je Möbelfuß (6) mindestens zwei erste Ausnehmungen (8), die in der der Außenseite (4a) der unteren Deckplatte (4) zugewandten Stirnseite (6a) des mindestens einen Möbelfußes (6) vorgesehen sind, mindestens zwei zu den ersten Ausnehmungen (8) jeweils koaxiale zweite Ausnehmungen (9), die in der Leichtbauplatte (2) vorgesehen sind und durch die untere Deckplatte (4) und die Mittellage (5) hindurch bis mindestens an die obere Deckplatte (3) reichen, und mindestens zwei Verbindungsstifte (10) aufweist, die jeweils in einer der mindestens zwei ersten Ausnehmungen (8) und einer der mindestens zwei zweiten Ausnehmungen (9) angeordnet sind.

3. Tisch (1) nach Anspruch 1 oder 2, **dadurch gekennzeichnet, dass** die mindestens eine erste Ausnehmung (8) und/oder die mindestens eine zweite Ausnehmung (9) eine Bohrung, insbesondere Sacklochbohrung, ist.

4. Tisch (1) nach einem der vorangehenden Ansprüche, **dadurch gekennzeichnet, dass** die Länge des mindestens einen Verbindungsstifts (10) der Summe aus der Tiefe der mindestens einen ersten Ausnehmung (8) und der mindestens einen zweiten Ausnehmung (9) entspricht.

5. Tisch (1) nach einem der vorangehenden Ansprüche, **dadurch gekennzeichnet, dass** die Verbindungsanordnung (7) derart konfiguriert ist, dass der mindestens eine Verbindungsstift (10) eine senkrecht auf die obere Deckplatte (3) wirkende Kraft im Eckbereich der Leichtbauplatte (2) auffangen und unmittelbar in den zugehörigen Möbelfuß (6) übertragen kann.

6. Tisch (1) nach einem der vorangehenden Ansprüche, **dadurch gekennzeichnet, dass** die der Außenseite (4a) der unteren Deckplatte (4) zugewandte Stirnseite (6a) des mindestens einen Möbelfußes (6) an der Außenseite (4a) der unteren Deckplatte (4) anliegt.

7. Tisch (1) nach einem der vorangehenden Ansprüche, **dadurch gekennzeichnet, dass** die Verbindungsanordnung (7) ferner ein Klebemittel (11) umfasst, das in der mindestens einen ersten Ausnehmung (8) und/oder in der mindestens einen zweiten Ausnehmung (9) und/oder zwischen der der unteren Deckplatte (4) zugewandten Stirnseite (6a) und der Außenseite (4a) der unteren Deckplatte (4) vorgesehen ist.

8. Tisch (1) nach einem der vorangehenden Ansprüche, **dadurch gekennzeichnet, dass** je Möbelfuß (6) mindestens eine dritte Ausnehmung (12) in einer der zur Längsrichtung (X) senkrechten Seiten oder Kanten (6c,6d) des mindestens einen Möbelfußes (6) vorgesehen ist, wobei insbesondere ein Auflagestift (13) in der mindestens einen dritten Ausnehmung (12) angeordnet ist, der teilweise aus der dritten Ausnehmung (12) herausragt.

9. Tisch (1) nach einem der vorangehenden Ansprüche, **dadurch gekennzeichnet, dass** die obere und/oder untere Deckplatte (3,4) aus einem Schichtstoff oder einem Holzwerkstoff, vorzugsweise einer Span-, Faser- oder OSB-Platte, und/oder der mindestens eine Möbelfuß (6) zumindest abschnittsweise aus Vollmaterial, insbesondere aus Vollholz oder einem Holzwerkstoff, vorzugsweise einem Span-, Faser- oder OSB-Pressteil, besteht.

10. Tisch (1) nach einem der vorangehenden Ansprüche, **dadurch gekennzeichnet, dass** die obere und/oder untere Deckplatte (3,4) eine Dicke aufweist, die in einem Bereich von 0,5 bis 10 mm, bevorzugt von 0,5 bis 5 mm, besonders bevorzugt von 0,5 bis 2 mm, liegt.

11. Tisch (1) nach einem der vorangehenden Ansprüche, **dadurch gekennzeichnet, dass** die Mittellage (5) aus einem Kartonwabenmaterial besteht.

12. Tisch (1) nach einem der vorangehenden Ansprüche 8 bis 11, **dadurch gekennzeichnet, dass** der jeweilige Auflagestift (13) ein Holzdübel ist.

13. Tisch (1) nach einem der vorangehenden Ansprüche, **dadurch gekennzeichnet, dass** der mindestens eine Möbelfuß (6) ein Tischbein ist.

## Claims

1. A table
- with a lightweight board (2) extending in a longitudinal direction (X), which comprises a top cover panel (3) and a bottom cover panel (4) made of a lignocellulose-containing material and as well as a light central layer (5) disposed between the latter, wherein the central layer (5) is made of a honeycomb material,
- with at least one furniture foot (6) extending perpendicular to the longitudinal direction (X), wherein the at least one furniture foot (6) is facing, with one of its end faces (6a, 6b), the external face (4a) of the bottom cover panel (4),
- with a connection arrangement (7), which connects the lightweight board (2) to the at least one furniture foot (6),
wherein the connection arrangement (7) comprises for each furniture foot (6) at least one first recess (8), which is provided in the end face (6a) of the at least one furniture foot (6) facing the external face (4a) of the bottom cover panel (4), at least one second recess (9) coaxial with the first recess (8), said second recess being provided in the lightweight board (2) and extending through the bottom cover panel (4) and the central layer (5) at least up to the top cover panel (3), and at least one connecting pin (10), which is disposed in the at least one first recess (8) and in the at least one second recess (9),
**characterised in that**
the at least one second recess (9) extends into the top cover panel (3), but not completely through the latter, wherein the at least one connecting pin (10) constituted as a wooden dowel is disposed with a press fit in the at least one first recess (8) and in the at least one second recess (9).

2. The table (1) according to claim 1, **characterised in that** the connection arrangement (7) comprises for each furniture foot (6) at least two first recesses (8), which are provided in the end face (6a) of the at least one furniture foot (6) facing the external face (4a) of the bottom cover panel (4), at least two second recesses (9) each coaxial with the first recesses (8), said second recesses being provided in the lightweight board (2) and extending through the bottom cover panel (4) and the central layer (5) at least up to the top cover panel (3), and at least two connecting pins (10), which are each disposed in one of the at least two first recesses (8) and in one of the at least two second recess (9).

3. The table (1) according to claim 1 or 2, **characterised in that** the at least one first recess (8) and/or the at least one second recess (9) is a bore, in particular a blind bore.

4. The table (1) according to any one of the preceding claims, **characterised in that** the length of the at least one connecting pin (10) corresponds to the sum of the depth of the at least one first recess (8) and of the at least one second recess (9).

5. The table (1) according to any one of the preceding claims, **characterised in that** the connection arrangement (7) is configured in such a way that the at least one connecting pin (10) can take up a force acting perpendicularly on the top cover panel (3) in the corner region of the lightweight board (2) and can directly transfer said force into the associated furniture foot (6).

6. The table (1) according to any one of the preceding claims, **characterised in that** the end face (6a) of the at least one furniture foot (6) facing the external face (4a) of the bottom cover panel (4) lies against the external face (4a) of the bottom cover panel (4).

7. The table (1) according to any one of the preceding claims, **characterised in that** the connection arrangement (7) further comprises an adhesive (11), which is provided in the at least one first recess (8) and/or in the at least one second recess (9) and/or between the end face (6a) facing the bottom cover panel (4) and the external face (4a) of the bottom cover panel (4).

8. The table (1) according to any one of the preceding claims, **characterised in that** for each furniture foot (6) at least one third recess (12) is provided in one of the sides or edges (6c, 6d) of the at least one furniture foot (6) lying perpendicular to the longitudinal direction (X), wherein in particular a support pin (13) is disposed in the at least one third recess (12), said support pin projecting partially out of the third recess (12).

9. The table (1) according to any one of the preceding claims, **characterised in that** the top and/or bottom cover panel (3, 4) is made of a laminate or a wood-based material, preferably a chipboard, fibreboard or OSB board, and/or the at least one furniture foot (6) is made at least in sections of solid material, in particular of solid wood or a wood-based material, preferably a chip, fibre or OSB pressed part.

10. The table (1) according to any one of the preceding claims, **characterised in that** the top and/or bottom cover panel (3, 4) has a thickness which lies in a range from 0,5 to 10 mm, preferably from 0,5 to 5 mm, particularly preferably from 0,5 to 2 mm.

11. The table (1) according to any one of the preceding claims, **characterised in that** the central layer (5) is made of a cardboard honeycomb material.

12. The table (1) according to any one of claims 8 to 11, **characterised in that** the respective support pin (13) is a wooden dowel.

13. The table (1) according to any one of the preceding claims, **characterised in that** the at least one furniture foot (6) is a table leg.

## Revendications

1. Table
- avec un panneau alvéolaire (2) s'étendant dans le sens longitudinal (X) et comportant un panneau de couverture supérieur (3) et un panneau de couverture inférieur (4) constitués d'un matériau contenant de la lignocellulose, ainsi qu'une couche intermédiaire légère (5) agencée entre eux, la couche intermédiaire (5) étant constituée d'un matériau alvéolé,
- avec au moins un pied de meuble (6) s'étendant perpendiculairement au sens longitudinal (X), l'au moins un pied de meuble (6) étant tourné avec l'un de ses côtés frontaux (6a, 6b) vers le côté extérieur (4a) du panneau de couverture inférieur (4),
- avec un arrangement d'assemblage (7) reliant le panneau alvéolaire (2) à l'au moins un pied de meuble (6),
dans laquelle l'arrangement d'assemblage (7) de chaque pied de meuble (6) comporte au moins une première cavité (8) prévue dans le côté frontal (6a) de l'au moins un pied de meuble (6) qui est tourné vers le côté extérieur (4a) du panneau de couverture inférieur (4), au moins une deuxième cavité (9) coaxiale par rapport à la première cavité (8), prévue dans le panneau alvéolaire (2) et s'étendant à travers le panneau de couverture inférieur (4) et la couche intermédiaire (5) au moins jusqu'au panneau de couverture supérieur (3), et au moins une tige d'assemblage (10) agencée dans l'au moins une première cavité (8) et dans l'au moins une deuxième cavité (9),
**caractérisée en ce que**
l'au moins une deuxième cavité (9) s'étend jusque dans le panneau de couverture supérieur (3) mais sans le traverser complètement, l'au moins une tige d'assemblage (10) conçue comme une cheville en bois étant disposée en ajustement serré dans l'au moins une première cavité (8) et dans l'au moins une deuxième cavité (9).

2. Table (1) selon la revendication 1, **caractérisée en ce que** pour chaque pied de meuble (6), l'arrangement d'assemblage (7) comporte au moins deux premières cavités (8) prévues dans le côté frontal (6a) de l'au moins un pied de meuble (6) qui est tourné vers le côté extérieur (4a) du panneau de couverture inférieur (4), au moins deux deuxièmes cavités (9) respectivement coaxiales par rapport aux deuxièmes cavités (8), prévues dans le panneau alvéolaire (2) et s'étendant à travers le panneau de couverture inférieur (4) et la couche intermédiaire (5) au moins jusqu'au panneau de couverture supérieur (3), et au moins deux tiges d'assemblage (10) agencées respectivement dans l'une des au moins deux premières cavités (8) et dans l'une des au moins deux deuxièmes cavités (9).

3. Table (1) selon la revendication 1 ou 2, **caractérisée en ce que** l'au moins une première cavité (8) et/ou l'au moins une deuxième cavité (9) est un perçage, en particulier un trou borgne.

4. Table (1) selon l'une des revendications précédentes, **caractérisée en ce que** la longueur de l'au moins une tige d'assemblage (10) correspond à la somme de la profondeur de l'au moins une première cavité (8) et de l'au moins une deuxième cavité (9).

5. Table (1) selon l'une des revendications précédentes, **caractérisée en ce que** l'arrangement d'assemblage (7) est configuré de manière à ce que l'au moins une tige d'assemblage (10) puisse absorber une force agissant perpendiculairement sur le panneau de couverture supérieur (3) dans la région de coin du panneau alvéolaire (2) et la transmettre directement au pied de meuble (6) correspondant.

6. Table (1) selon l'une des revendications précédentes, **caractérisée en ce que** le côté frontal (6a) de l'au moins un pied de meuble (6) qui est tourné vers le côté extérieur (4a) du panneau de couverture inférieur (4) s'applique sur le côté extérieur (4a) du panneau de couverture inférieur (4).

7. Table (1) selon l'une des revendications précédentes, **caractérisée en ce que** l'arrangement d'assemblage (7) comprend en outre un adhésif (11) prévu dans l'au moins une première cavité (8) et/ou dans l'au moins une deuxième cavité (9) et/ou entre le côté frontal (6a) tourné vers le panneau de couverture inférieur (4) et le côté extérieur (4a) du panneau de couverture inférieur (4).

8. Table (1) selon l'une des revendications précédentes, **caractérisée en ce que** pour chaque pied de meuble (6), il est prévu au moins une troisième cavité (12) dans l'un des côtés ou l'une des arêtes (6c, 6d) perpendiculaires au sens longitudinal (X) de l'au moins un pied de meuble (6), une tige d'appui (13) étant en particulier agencée dans l'au moins une troisième cavité (12) tout en faisant partiellement saillie hors de la troisième cavité (12).

9. Table (1) selon l'une des revendications précédentes, **caractérisée en ce que** le panneau de couverture supérieur et/ou inférieur (3, 4) est constitué d'un stratifié ou d'un produit dérivé du bois, de préférence un panneau de copeaux, de fibres ou en OSB, et/ou l'au moins un pied de meuble (6) est constitué au moins par endroits d'un matériau massif, en particulier du bois massif ou un produit dérivé du bois, de préférence une pièce pressée à base de copeaux, à base de fibres ou OSB.

10. Table (1) selon l'une des revendications précédentes, **caractérisée en ce que** le panneau de couverture supérieur et/ou inférieur (3, 4) présente une épaisseur dans la plage de 0,5 à 10 mm, de préférence de 0,5 à 5 mm, et mieux, de 0,5 à 2 mm.

11. Table (1) selon l'une des revendications précédentes, **caractérisée en ce que** la couche intermédiaire (5) est constituée d'un matériau en carton alvéolé.

12. Table (1) selon l'une des revendications 8 à 11, **caractérisée en ce que** la tige d'appui (13) respective est une cheville en bois.

13. Table (1) selon l'une des revendications précédentes, **caractérisée en ce que** l'au moins un pied de meuble (6) est un pied de table.
